# EUROPEAN PATENT APPLICATION

(11) **EP 4 162 899 A1**
(43) Date of publication of application: **12.04.2023**
(21) Application number: 21201939.2
(22) Date of filing: 11.10.2021
(51) Int. Cl.: A61C 17/22

(54) **SYSTEM AND METHOD FOR PROVIDING CLEANING GUIDANCE**

(71) Applicant: Koninklijke Philips N.V., 5656 AG Eindhoven (NL)
(72) Inventor: STUT, Wilhelmus Johannes Joseph, 5656 AE Eindhoven (NL); RMAILE, Amir Hussein, 5656 AE Eindhoven (NL)
(74) Representative: Philips Intellectual Property & Standards

(57) **Abstract**

A system and method for providing cleaning guidance to a user of a tooth cleaning device during a cleaning session. Cleaning history data, comprising at least the position(s) at which the user has cleaned first during past cleaning sessions, is received and processed to generate cleaning guidance. The cleaning guidance is provided to the user via a feedback unit.

## Description

### FIELD OF THE INVENTION

The invention relates to the field of automated cleaning guidance, and in particular to automated cleaning guidance during a tooth cleaning session.

### BACKGROUND OF THE INVENTION

Good oral care practice is essential for maintaining oral health. In particular, it is important that each tooth is cleaned correctly and for a sufficient time during each tooth cleaning session. A number of tooth cleaning products are available on the market, and include toothbrushes, (water) tooth flossers or oral irrigators, and even ultrasonic scalers.

Various products (e.g. smart tooth cleaning devices and tooth cleaning related apps) have been developed to give users of tooth cleaning devices guidance on (appropriate) cleaning behavior. For example, some toothbrushes include sensors that measure a position of the brush head, and a user is provided with feedback indicating areas that have not been brushed. Provision of cleaning guidance has shown to improve a subject's oral hygiene, as it provides useful information for performing a task of cleaning teeth with improved efficiency and accuracy.

There is an ongoing desire to improve the cleaning guidance provided to a user of a tooth cleaning device, in order to facilitate improved oral hygiene of the subject.

### SUMMARY OF THE INVENTION

The invention is defined by the claims.

According to examples in accordance with an aspect of the invention, there is provided a processing system for providing cleaning guidance to a subject.

The processing system is configured to: receive cleaning history data comprising an initial cleaning position of a tooth cleaning device for each of a plurality of previous cleaning sessions of the subject; generate cleaning guidance for a current cleaning session by processing the cleaning history data; and control a feedback unit to provide a user-perceptible output representative of the generated cleaning guidance.

The inventors have recognized that people often start cleaning their teeth at the same position for every cleaning session. For example, a subject may always start at a top left tooth segment.

Typically, a subject will start cleaning with a higher pressure or intensity and clean at an initial position for longer than at later positions. This is particularly evidenced if the tooth cleaning device is a toothbrush, as brushing intensity will decrease throughout a cleaning session due to user fatigue. If the subject has the same initial position for every cleaning session, this results in gums at this position being more recessed than gums at other positions in the mouth.

By generating cleaning guidance based on a subject-specific history of starting positions, the generated guidance may enable the subject to clean in a way that will reduce the effects of using the same initial cleaning position.

In some examples, the generated cleaning guidance comprises a suggested initial cleaning position.

In this way, the subject can be guided to vary the initial cleaning position they use. This reduces the likelihood that different parts of the mouth will be cumulatively cleaned (i.e. over a period of time) at different rates.

In some examples, the processing system generates the cleaning guidance based on the cleaning history data by: determining an initial cleaning position frequency for each of a plurality of predefined initial cleaning positions based on the cleaning history data; and generating the cleaning guidance based on the determined initial cleaning position frequencies.

In this way, the generated guidance may take into account which position(s) the subject usually cleans first, and which positions are rarely or never used as an initial cleaning position by the subject.

The predefined initial cleaning positions may correspond to particular tooth surface positions or tooth segment positions. For example, the plurality of predefined initial cleaning positions may comprise a position of each surface (e.g. inner, outer) of each tooth in the subject's mouth.

In some examples, the generated cleaning guidance comprises a suggested initial cleaning position, and the processing system generates the cleaning guidance based on the determined initial cleaning position frequencies by: determining a most frequent initial cleaning position based on the determined initial cleaning position frequencies; and generating a suggested initial cleaning position based on the most frequent initial cleaning position.

In this way, an alternative to the initial cleaning position most commonly used by the subject may be suggested as an initial cleaning position for the current cleaning session.

In some examples, the generated cleaning guidance comprises a suggested initial cleaning position, and the processing system generates the cleaning guidance based on the determined initial cleaning position frequencies by: determining a least frequent initial cleaning position based on the determined initial cleaning position frequencies; and generating a suggested initial cleaning position based on the least frequent initial cleaning position.

If an initial cleaning position is suggested using this approach for each cleaning session, an equal distribution of the predefined initial cleaning positions may be achieved over time.

In some examples, the cleaning history data further comprises a final cleaning position of the tooth cleaning device for each of the plurality of previous cleaning sessions of the subject.

Just as users of a tooth cleaning device tend to start at the same position each time they clean their teeth, many finish at a same final cleaning position.

Due to user fatigue, the teeth at a final cleaning position of a cleaning session are generally not given as much attention as the teeth cleaned earlier in the cleaning session. Users typically clean at a final cleaning position for a shorter time and with less pressure/intensity compared with earlier positions.

If the same teeth are always cleaned last, these teeth may never be cleaned sufficiently. By basing the generated cleaning guidance on a subject-specific history of finishing positions as well as starting positions, the generated guidance may enable the subject to clean in a way that will reduce the effects of using the same final cleaning position (over a period of time).

In some examples, the cleaning history data comprises a sequence of cleaning positions of the tooth cleaning device for each of the plurality of previous cleaning sessions of the subject.

In this way, not only are the common first and last cleaning positions for the subject taken into account, but also the order in which each of the subject's tooth surfaces/segments are usually cleaned. This recognizes that teeth cleaned earlier in the sequence are generally cleaned for longer and with more pressure than teeth cleaned later on.

If a subject always uses a same cleaning sequence when cleaning their teeth, teeth cleaned at a second cleaning position may experience many of the same disadvantages as teeth at the initial cleaning position, while teeth at a penultimate cleaning position may suffer from a lack of attention in a similar way to teeth at the final cleaning position.

A sequence of cleaning positions for a cleaning session is an order in which the cleaning positions are cleaned.

In some examples, the generated cleaning guidance comprises a suggested cleaning sequence including an initial cleaning position and at least one other suggested position.

In this way, the subject may be guided to clean in different sequences for different cleaning sessions, such that each tooth surface/segment receives equal attention over time.

The at least one other suggested position may comprise a suggested final cleaning position.

In this way, the subject may be guided to vary the final cleaning position between different cleaning sessions as well as varying the initial cleaning position.

The at least one other suggested position may comprise a suggested starting position for a second sub-sequence of the suggested cleaning sequence.

In this embodiment, the initial cleaning position may be a suggesting starting position for a first sub-sequence of the suggested cleaning sequence. The second sub-sequence may be sequentially after the first sub-sequence.

A second sub-sequence of a cleaning sequence may be defined as the arch surface (e.g. an inside surface of the upper arch) cleaned immediately after the arch surface to which the initial cleaning position belongs (and which represents a suggested starting position for a first sub-sequence that cleans said arch surface). It may be presumed that a subject will clean the whole of a particular arch surface together, and the remainder of the cleaning sequence may be determined based on the second sub-sequence (as the third sub-sequence is likely to be whichever sub-sequence most naturally follows on from the end position of the second sub-sequence). The final cleaning position used by the subject may therefore be varied by varying the suggested initial cleaning position and starting position of the second sub-sequence.

A subject may find it easier to follow guidance instructing them on the initial cleaning position and starting position of the second sub-sequence than guidance comprising only suggested initial and final cleaning positions, as in the latter case the subject must determine themselves a path that will take them from the initial cleaning position to the final cleaning position.

In some examples, the processing system is further configured to: receive, from a sensor, cleaning position data representative of a position of a tooth cleaning device within a mouth of the subject during the current cleaning session; detect one or more cleaning positions in the cleaning position data, wherein the one or more cleaning positions comprises at least an initial cleaning position; and control a memory unit to store the one or more cleaning positions.

In this way, the cleaning history data is kept up-to-date, allowing the processing system to determine the most appropriate guidance at the next cleaning session.

An initial cleaning position may, for example, be detected as a first position of the tooth cleaning device during a cleaning session in which a cleaning motion of the tooth cleaning device is detected, or a first position in which it is detected that the tooth cleaning device makes contact with a tooth.

When additional cleaning positions (e.g. a final cleaning position) are detected, the one or more cleaning positions may be stored in the memory unit as a sequence in order of time at which each position was cleaned.

There is also proposed a system for providing cleaning guidance to a subject. The system comprises: a memory unit, configured to store cleaning history data comprising an initial cleaning position of a tooth cleaning device for each of a plurality of previous cleaning sessions of the subject; the processing system described above, configured to receive the cleaning history data from the memory unit; and a feedback unit, configured to provide to provide a user-perceptible output representative of the generated cleaning guidance based on an instruction from the processing system.

In some examples, the system further comprises one or more sensors, configured to obtain cleaning position data representative of a position of a tooth cleaning device within a mouth of the subject, and the processing unit is configured to: receive the cleaning position data from the one or more sensors; detect one or more cleaning positions in the cleaning position data, wherein the one or more cleaning positions comprises at least an initial cleaning position; and control the memory unit to store the one or more cleaning positions.

According to another aspect of the invention, there is provided a computer-implemented method for providing cleaning guidance to a subject. The computer-implemented method comprises: receiving cleaning history data comprising an initial cleaning position of a tooth cleaning device for each of a plurality of previous cleaning sessions of the subject; generating cleaning guidance for a current cleaning session based on the cleaning history data; and controlling a feedback unit to provide a user-perceptible output representative of the generated cleaning guidance.

There is also proposed a computer program product comprising computer code means which, when executed on a computer device having a processing system, cause the processing system to perform all of the steps of the method described above.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 illustrates an overview of teeth in a mouth of a subject, and a typical cleaning sequence used by the subject during a cleaning session;
Figure 2 illustrates a system for providing cleaning guidance to a subject, according to an embodiment of the invention;
Figure 3 illustrates an example of cleaning history data of the subject; and
Figure 4 illustrates a computer-implemented method for providing cleaning guidance to a subject, according to an embodiment of the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

According to a concept of the invention, there is proposed a system and method for providing cleaning guidance to a user of a tooth cleaning device during a cleaning session. Cleaning history data, comprising at least the position(s) at which the user has cleaned first during past cleaning sessions, is received and processed to generate cleaning guidance. The cleaning guidance is provided to the user via a feedback unit.

Embodiments are at least partly based on the realization that users of tooth cleaning devices generally begin cleaning at the same position each time they clean their teeth and often clean each segment of teeth in the same order each time, and on the realization that this can lead to some of a user's teeth being over-cleaned while other teeth of the same user are under-cleaned.

Illustrative embodiments may, for example, be employed in smart tooth cleaning devices, such as smart toothbrushes and smart oral irrigators, and applications for smart tooth cleaning devices.

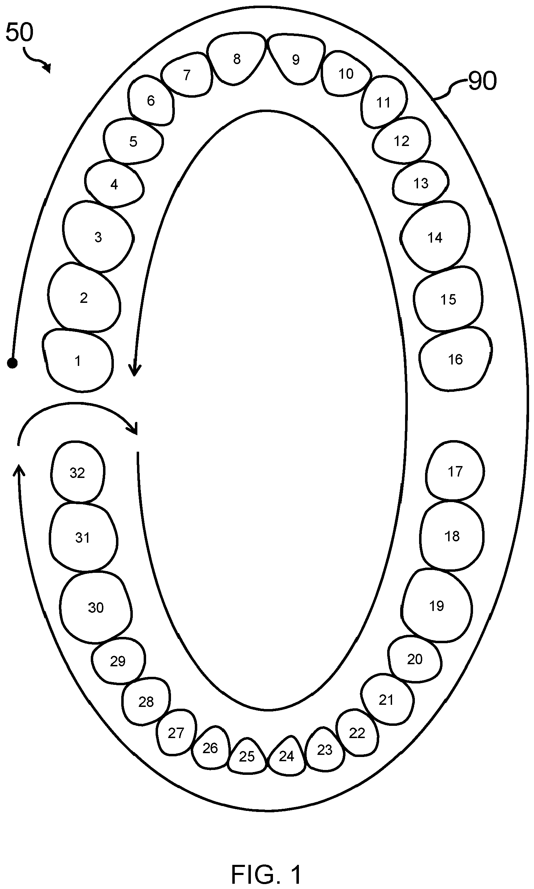

Figure 1 illustrates an overview of teeth 1-32 in a mouth 50 of a subject, and atypical cleaning sequence 90 used by the subject during a cleaning session. A cleaning session is a session during which the subject uses a tooth cleaning device (e.g. a toothbrush, oral irrigator, etc.) to clean their teeth.

In cleaning sequence 90, the subject starts to clean their teeth at tooth 1, cleans the outside of the upper arch (teeth 1-16) of the teeth, then the outside of the lower arch (teeth 17-32), the inside of the lower arch, and finally the inside of the upper arch, finishing cleaning at the inside of tooth 1.

Many people use the same cleaning sequence each time they clean their teeth. This can create negative consequences for oral health, as people tend to become fatigued over the course of a cleaning session. They therefore clean the teeth cleaned at the beginning of a cleaning session for longer, and with greater pressure and intensity, than teeth cleaned towards the end of the session.

For example, if the subject uses cleaning sequence 90 every time (or most times) they clean their teeth, the outside of the upper left segment of teeth will, over time, have been cleaned much more than the inside of the upper left segment. This may cause oral health issues due to over-cleaning at the outside of the upper left segment (e.g. tooth abrasion and receding gums) and other oral health issues, due to under-cleaning, at the inside of the upper left segment (e.g. tooth decay and gum disease).

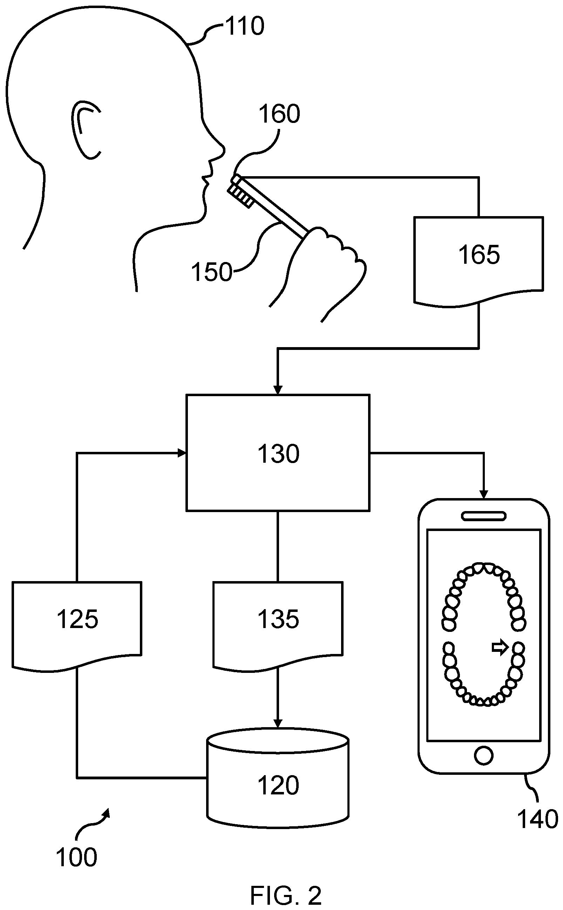

Figure 2 illustrates a system 100 for providing cleaning guidance to a subject 110, according to an embodiment of the invention. The system comprises a memory unit 120, a processing system 130, and a feedback unit 140. The processing system 130 is, itself, an embodiment of the invention.

The system 100 provides guidance to the subject regarding the use of a tooth cleaning device 150, and aims to reduce the effects on the subject's teeth of continually cleaning with the tooth cleaning device in a same cleaning sequence (e.g. cleaning sequence 90 of Figure 1), and in particular of using a same initial cleaning position for most or all cleaning sessions.

In Figure 2, the tooth cleaning device 150 is a toothbrush, but the tooth cleaning device may be any tooth cleaning device for which uneven cleaning may lead to oral health issues, such as oral irrigators and teeth cleaners (interdental picks).

The memory unit 120 stores cleaning history data 125 for the subject 110. The cleaning history data comprises information relating to previous cleaning sessions of the subject, and includes at least an initial cleaning position of the tooth cleaning device 150 for each of a plurality of previous cleaning sessions of the subject.

An initial cleaning position for a cleaning session is the first position at which the subject 110 cleaned during the cleaning session. The initial cleaning position may be defined in terms of a particular tooth (e.g. tooth 1 in Figure 1), a particular tooth surface (e.g. an outer surface of tooth 1), a particular tooth segment (e.g. the outside of the upper left segment), or a particular interdental space (e.g. the space between tooth 1 and tooth 2).

The initial cleaning position for each of the plurality of previous cleaning sessions may, for example, be stored individually for each previous cleaning session (e.g. as a list of previous cleaning positions) and/or in terms of a frequency for each of a plurality of possible initial cleaning positions (e.g. as a total of how many times each of the plurality of possible initial cleaning positions has been used as the initial cleaning position over all the previous cleaning sessions). The plurality of possible initial cleaning positions may be predefined, or an initial cleaning position may be added to the cleaning history data as a possible initial cleaning position when it is first used as an initial cleaning position by the subject 110.

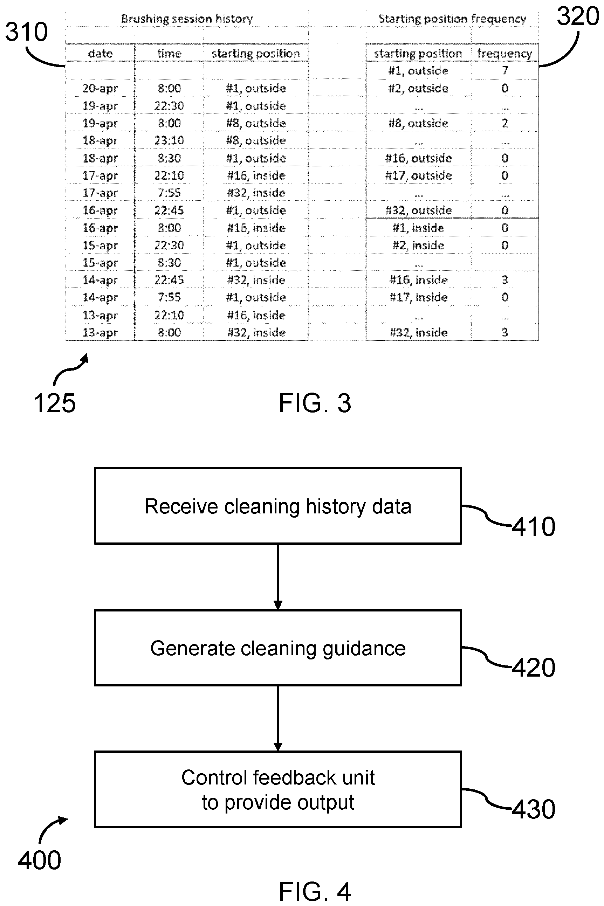

Figure 3 illustrates an example of cleaning history data 125 of the subject 110. In Figure 3, the cleaning history data is stored in two tables 310 and 320. Table 310 contains the date, time and initial cleaning position of each previous cleaning session. In Table 310, the initial cleaning positions are defined in terms of a number of the tooth at which the subject started cleaning (the teeth are numbered using the same numbering scheme shown in Figure 1) and the surface of this tooth that was first cleaned (i.e. inside or outside).

The initial cleaning positions are aggregated in Table 320, which contains the frequency that each tooth surface has been used as the initial cleaning position in the previous cleaning sessions.

In some examples, the cleaning history data 125 may further comprise additional information. For instance, the cleaning history data may further comprise a final cleaning position of the tooth cleaning device 150 for each of the plurality of previous cleaning sessions of the subject 110. A final cleaning position for a cleaning session is the last position at which the subject cleaned during the cleaning session. As with the initial cleaning position, the final cleaning position and any other cleaning position may be defined in terms of a particular tooth, a particular tooth surface, a particular tooth segment, or a particular interdental space.

Additionally or alternatively, the cleaning history data 125 may further comprise a starting position of a second sub-sequence of the cleaning sequence. A cleaning sequence may be considered as being divided into sub-sequences for cleaning the inside and outside of each of the upper and lower arches. The initial cleaning position may represent a position for a first sub-sequence. A starting position of a second sub-sequence (which is sequentially after the first sub-sequence) is a position at which the subject first cleans a different arch (e.g. lower instead of upper) and/or a different surface of an arch (e.g. inside instead of outside) to the surface/arch cleaned at the initial cleaning position.

In some examples, the cleaning history data 125 may comprise a sequence of cleaning positions of the tooth cleaning device 150 for each of the plurality of previous cleaning sessions of the subject. A sequence of cleaning positions may, for example, comprise each cleaning position used during a cleaning session in the order in which they were cleaned (i.e. from the initial cleaning position to the final cleaning position). In another example, a sequence of cleaning positions may comprise a starting position for each of the sub-sequences that make up the cleaning sequence.

Returning to Figure 2, the cleaning history data 125 may be based on data from one or more sensors 160, and may be updated every cleaning session. The use of one or more sensors to obtain the cleaning history data during a brushing sensor is described in more detail below.

The processing system 130 receives the cleaning history data 125 from the memory unit 120, and processes the cleaning history data to generate cleaning guidance for a current cleaning session.

The processing system 130 may generate cleaning guidance in advance of a current cleaning session (i.e. between an end of an immediately previous cleaning session and a start of a current cleaning session) or in response to a determination that a current cleaning session has started. For example, the processing system may receive the cleaning history data and generate cleaning guidance in response to one or more predefined initialization conditions being met (e.g. a determination that the subject 110 has picked up the tooth cleaning device 150, a determination that the tooth cleaning device has been switched on, etc.).

The generated cleaning guidance may comprise any suitable guidance that, if followed, would work to counteract the effects of having used a same initial cleaning position for a majority of the previous cleaning sessions.

In some examples, the cleaning guidance may comprise one or more suggested cleaning positions for a current cleaning session (e.g. a suggested initial cleaning position or a suggested cleaning sequence).

In other examples, the cleaning guidance may aim to counteract these effects in other ways, such as by instructing the subject to stop cleaning at a usual (for the subject) initial cleaning position once a time spent cleaning at this position during the current cleaning session has reached a predetermined threshold. Similarly, where the cleaning history data 125 further comprises previous final cleaning positions or previous cleaning sequences, the subject may be instructed to clean for a longer time at positions commonly cleaned at or near the end of cleaning sessions.

The processing system 130 may generate the cleaning guidance based on how often each of a plurality of predefined initial cleaning positions has been used as an initial cleaning position in the previous cleaning sessions (i.e. an initial cleaning position frequency for each predefined initial cleaning position). The predefined initial cleaning positions may comprise, for example, each tooth surface in the mouth of the subject 110, each interdental space, each tooth segment, or a particular set of tooth surfaces or interdental spaces (e.g. a set comprising the surfaces of or spaces between teeth at an end of an arch or segment).

The processing system 130 may first determine an initial cleaning position frequency for each of the plurality of predefined initial cleaning positions in order to generate the cleaning guidance based on the initial cleaning position frequencies. In some examples, an initial cleaning position frequency for each of the plurality of predefined initial cleaning positions may be included in the cleaning history data 125, in which case the processing system may omit the step of determining the initial cleaning position frequencies.

The processing system 130 may, for example, determine a most frequent initial cleaning position based on the initial cleaning position frequencies, and generate cleaning guidance based on the most frequent initial cleaning position. For instance, the generated cleaning guidance may comprise a suggested initial cleaning position that is a different position to the most frequent cleaning position.

The processing system 130 may be configured to generate a suggested initial cleaning position such that, over time, the initial cleaning positions used by the subject are equally distributed over the mouth. For example, the processing system may generate cleaning guidance such that each surface of each of a predefined set of teeth is, over time, used as an initial cleaning position an equal number of times (e.g. a set comprising the inside and outside of each of the teeth furthest in the mouth, i.e., teeth 1, 16, 17, and 32 using the numbering system of Figure 1). In another example, the processing system may generate cleaning guidance such that, over time, the initial cleaning positions used are equally distributed across the inside and outside of each segment of teeth in the subject's mouth.

An equal distribution of initial cleaning positions may, for example, be achieved by, for each cleaning session, determining a least frequent initial cleaning position based on the initial cleaning position frequencies, and generating cleaning guidance based on the least frequent cleaning position. For instance, the generated cleaning guidance may comprise a suggestion that the least frequent initial cleaning position is used as the initial cleaning position (or a least frequent initial cleaning position out of the predefined set of teeth). By always suggesting an initial cleaning position for a cleaning session corresponding to the least frequent position at a time of that cleaning session, the cleaning guidance will guide the user to an equal distribution of initial cleaning positions.

Using the example cleaning history data 125 shown in Figure 3, for example, the processing system 130 may determine that a most frequent initial cleaning position for the subject 110 is the outside of tooth 1. The processing system may generate cleaning guidance based on the outside of tooth 1 being the most frequent initial cleaning position. For instance, the processing system may generate a suggested initial cleaning position that is different to the outside of tooth 1.

The processing system 130 may additionally or alternatively determine from the cleaning history data 125 shown in Figure 3 that several tooth surfaces (such as the outside of tooth 17 and the inside of tooth 1) have never been used as an initial cleaning position by the subject 110. Any or all of these tooth surfaces may be considered a least frequent initial cleaning position for the subject. The processing system may generate cleaning guidance based on one or more of these tooth surfaces being the least frequent initial cleaning position(s). For instance, the processing system may suggest one of these tooth surfaces (e.g. the outside of tooth 17) as an initial cleaning position.

Returning to Figure 2, the processing system 130 may, in some examples, use further information in addition to the subject's previous initial cleaning positions to generate a suggested initial cleaning position. For instance, if the cleaning history data 125 further comprises a final cleaning position for each of the plurality of previous cleaning sessions, the processing system may take into account a final cleaning position frequency for each of a plurality of predefined final cleaning positions as well as an initial cleaning position frequency (e.g. by selecting a position that is among the least frequent initial cleaning positions and among the most frequent final cleaning positions as the suggested initial cleaning position). Further examples of how additional information in the cleaning history data may be used to generate a suggested initial cleaning position will be apparent to the skilled person.

In some examples, the generated cleaning guidance may comprise a suggested cleaning sequence. A suggested cleaning sequence includes a suggested initial cleaning position and at least one other suggested position. For example, a suggested cleaning sequence may comprise a suggested initial cleaning position and a suggested final cleaning position, allowing the subject to determine the path they will take between the initial and final cleaning positions. In another example, the suggested cleaning sequence may comprise a suggested initial cleaning position (representing a suggested starting position for a first sub-sequence) and a suggested starting position for the second sub-sequence. In yet another example, the suggested cleaning sequence may comprise a suggestion of a cleaning order of each position cleaned during the cleaning session, from the initial cleaning position to the final cleaning position.

A suggested cleaning sequence guides the subject 110 to vary the final cleaning position used across cleaning session as well as the initial cleaning position. Where only an initial cleaning position is suggested, it is possible that the subject may continue to use the same final cleaning position except when this position is the suggested initial cleaning position.

The suggested cleaning sequence may guide the subject 110 to vary the final cleaning position by including a suggested final cleaning position and/or by suggesting a starting position for the second sub-sequence, which will determine the path taken by the subject once they have finished cleaning the segment or arch surface (e.g. the outside of the upper left segment or the inside of the lower arch) at which the cleaning session started. For instance, if the cleaning guidance suggests that the subject starts cleaning at the outside of the upper left segment and then cleans the inside of the upper right segment, the subject will most likely first clean the outside of the upper arch, then the inside of the upper arch, followed by the inside of the lower arch and the outside of the lower arch. When the subject is about to start with the outside of the lower arch, the cleaning guidance may additionally suggest finishing cleaning at the outside of the lower left segment (in other words, the suggested cleaning sequence may include both a suggested starting position for the second sub-sequence and a suggested final cleaning position).

In some examples, the suggested cleaning sequence may, in addition to the suggested starting position for the second sub-sequence, include a suggestion for a starting position for a subsequent (e.g. third and/or fourth) sub-sequence. For instance, the suggested cleaning sequence may comprise a suggested starting position for each sub-sequence in the cleaning sequence: the suggested initial cleaning position, the suggested starting position for the second sub-sequence, a suggested starting position for the third subsequence, and a suggested starting position for the fourth subsequence. For example, the cleaning guidance may suggest that the subject starts cleaning at the outside of the upper left segment, then cleans the inside of the upper right segment, and then the inside of the lower left segment; the cleaning guidance may further suggest that the subject then cleans the outside of the lower right segment and/or that the subject finishes cleaning at the outside of the lower left segment.

A suggested cleaning sequence may be generated by applying similar methods to those described above for generating a suggested initial cleaning position, and how to apply these methods to generating a suggested cleaning sequence will be apparent.

When the cleaning history data 125 comprises only the initial cleaning positions for the previous cleaning sessions, the processing system 130 may, for example, generate a suggested initial cleaning position as described above and then generate at least one other suggested position based on a predefined sequence corresponding to the suggested initial cleaning position. In another example, the processing system may generate the at least one other suggested position such that the subject will vary the sequence used following a particular initial cleaning position over time. For instance, the first time that the cleaning guidance suggests starting cleaning at the outside of the upper left segment, the cleaning guidance may suggest that the subject finishes cleaning at the inside of the upper left segment (see Figure 1). The next time that the cleaning guidance suggests starting cleaning at the outside of the upper left segment (i.e. at a later cleaning session), the cleaning guidance may suggest that the subject finishes cleaning at the outside of the lower left segment.

When the cleaning history data 125 comprises further information in addition to the previous initial cleaning positions, the processing system 130 may take this further information into account when generating a suggested cleaning sequence. For example, if the cleaning history data further comprises final cleaning positions of the previous cleaning sessions, the processing system may determine a suggested initial cleaning position based on the initial cleaning position frequencies and a suggested final cleaning position based on the final cleaning position frequencies. For instance, the cleaning guidance may comprise a least frequent initial cleaning position as a suggested initial cleaning position and a least frequent final cleaning position as a suggested final cleaning position. The processing system may additionally determine a path between the suggested initial cleaning position and the suggested final cleaning position to suggest an entire sequence of cleaning positions for the cleaning session. Further examples of how additional information in the cleaning history data may be used to generate a suggested cleaning sequence will be apparent to the skilled person.

Having generated the cleaning guidance, the processing system 130 controls the feedback unit 140 to provide a user-perceptible output representative of the generated cleaning guidance.

In Figure 2, the feedback unit 140 is a smartphone, but any device capable of providing a user-perceptible output during a cleaning session may be used (e.g. a tablet or a smart mirror). In some examples, the feedback unit may be a device (e.g. a display or a speaker) housed on or within the tooth cleaning device 150.

The user-perceptible output may be any user-perceptible output suitable for communicating cleaning guidance to a subject. For example, the user-perceptible output may be a visual indicator, such as a textual display (e.g. "upper right, inside") or an image, or an audio indicator, such as a recorded spoken instruction. In Figure 2, the user-perceptible output is an image of a set of teeth with an arrow pointing at a suggested initial cleaning position.

If the cleaning guidance comprises a suggested cleaning sequence, the cleaning guidance may be given all at once (e.g. an image showing a path of the suggested cleaning sequence or with arrows pointing at the suggested initial cleaning position and to the suggested final cleaning position and/or starting position for the second sub-sequence) or as a series of separate instructions (e.g. a first instruction for the suggested initial cleaning position at the start of the cleaning session and a second instruction for the suggested starting position for the second sub-sequence once the subject has started to clean at the initial cleaning position).

In some examples, the system 100 further comprises one or more sensors 160 configured to obtain cleaning position data 165 representative of a position of the tooth cleaning device 150 within the mouth of the subject 110.

The one or more sensors 160 may comprise any sensors suitable for obtaining cleaning position data representative of a position of the tooth cleaning device 150 within the mouth of the subject 110. For example, the one or more sensors 160 may comprise one or more inertial motion units, accelerometers, gyroscopes, inclinometers, magnetometers, pressure sensors, timers, temperature sensors, optical sensors, infrared sensors, ultrasonic sensors and/or cameras.

Sensors for determining a position of a tooth cleaning device within a mouth of a subject, and methods for determining the position of the tooth cleaning device based on data from sensors, are well known and commonly used by smart tooth cleaning devices and tooth cleaning related apps. See, for example, International Patent Applications having publication numbers WO 2009/107047 A1, WO 2014/036423 A1, WO 2018/065373 A1 and WO 2019/137841 A1.

In Figure 2, the one or more sensors 160 are mounted at the head of the tooth cleaning device 150. However, the one or more sensors may additionally or alternatively be located at another position on or in the tooth cleaning device or, where appropriate, in a separate device (e.g. a camera in a smart mirror or smartphone).

The processing system 130 receives the cleaning position data 165 from the one or more sensors 160 during a cleaning session (i.e. a current cleaning session), and processes the cleaning position data to detect one or more cleaning positions 135 in the cleaning position data. The one or more cleaning positions comprise at least an initial cleaning position for the cleaning session.

An initial cleaning position for the cleaning session may be detected in the cleaning position data 165 based on one or more predefined criteria. For example, an initial cleaning position may be defined as a position at which the tooth cleaning device 150 first makes contact with a tooth of the subject 110 (e.g. if the tooth cleaning device is a toothbrush) during a cleaning session (i.e. since the tooth cleaning device was most recently turned on or most recently held by the subject), a position at which the tooth cleaning device first enters an interdental space (e.g. if the tooth cleaning device is an oral irrigator), and/or a position at which a cleaning motion associated with use of the tooth cleaning device is first detected.

In some examples, the one or more cleaning positions 135 may additionally comprise a final cleaning position for the cleaning session. For example, a final cleaning position may be defined as a last position at which the tooth cleaning device 150 makes contact with a tooth of the subject 110 during a cleaning session (i.e. the last position before the tooth cleaning device was turned off or put down by the subject), a last position at which the tooth cleaning device enters an interdental space, and/or a last position at which a cleaning motion associated with use of the tooth cleaning device is last detected.

The subject may, in some cases, not clean all their teeth (or not clean all surfaces of all teeth) in a particular cleaning session. Positions that are not cleaned in a cleaning session will not be included in the cleaning position data 165. In other words, the final cleaning position for a cleaning session is the 'real' final cleaning position (i.e. the position cleaned last in the cleaning session) rather than a hypothetical final cleaning position (e.g. a suggested final cleaning position in the cleaning guidance) that was not actually cleaned at all. If a subject generally follows the same cleaning sequence and often fails to complete the sequence (e.g. due to fatigue), positions that are often not cleaned at all will rarely (if ever) be included in the history of initial cleaning positions for the subject; guidance based on the previous initial cleaning positions would, therefore, be likely to include a suggestion to start cleaning at one of these positions.

In some examples, the one or more cleaning positions 135 may comprise a starting position of a second sub-sequence of the cleaning sequence. The cleaning sequence may be conceptually divided into a plurality of sub-sequences, including at least a first and a second sub-sequence (the second being sequentially after the first). The initial starting position ma represent a starting position for the first sub-sequence. Different sub-sequences may represent different arch or arch portions of the subject. A second sub-sequence may be differentiated from a first sub-sequence by the tooth cleaning device 150 moving from the outside of the teeth to the inside of the teeth (or vice versa), or from one arch (e.g. an upper arch) to another arch (e.g. a lower arch). For instance, if the initial cleaning position is at an outside tooth surface on the upper arch of the teeth, a starting position of a second sub-sequence may be a first position at which the tooth cleaning device is determined to be cleaning an inside tooth surface and/or a first position at which the tooth cleaning device is determined to be cleaning a tooth on the lower arch of the teeth.

In some examples, the one or more cleaning positions 135 may comprise an entire cleaning sequence. In other words, the one or more cleaning positions may comprise each cleaning position of the cleaning session in order of the time at which the cleaning positions were cleaned (i.e. from the initial cleaning position to the final cleaning position).

Having detected the one or more cleaning positions 135 in the cleaning position data 165, the processing system 130 then controls the memory unit 120 to store the one or more cleaning positions as part of the cleaning history data 125. In other words, at a next cleaning session, the cleaning history data includes data from the current cleaning session.

Figure 4 illustrates a computer-implemented method 400 for providing cleaning guidance to a subject, according to an embodiment of the invention.

The method begins at step 410, in which cleaning history data comprising an initial cleaning position of a tooth cleaning device for each of a plurality of previous cleaning sessions of the subject.

At step 420, cleaning guidance for a current cleaning session is generated based on the cleaning history data.

At step 430, a feedback unit is controlled to provide a user-perceptible output representative of the generated cleaning guidance.

It will be understood that the disclosed methods are computer-implemented methods. As such, there is also proposed a concept of a computer program comprising code means for implementing any described method when said program is run on a processing system.

The skilled person would be readily capable of developing a processor for carrying out any herein described method. Thus, each step of a flow chart may represent a different action performed by a processor, and may be performed by a respective module of the processor.

As discussed above, the system makes use of a processor to perform the data processing. The processor can be implemented in numerous ways, with software and/or hardware, to perform the various functions required. The processor typically employs one or more microprocessors that may be programmed using software (e.g. microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

## Claims

1. A processing system (130) for providing cleaning guidance to a subject (110), the processing system being configured to:
receive cleaning history data (125) comprising an initial cleaning position of a tooth cleaning device (150) for each of a plurality of previous cleaning sessions of the subject;
generate cleaning guidance for a current cleaning session by processing the cleaning history data; and
control a feedback unit (140) to provide a user-perceptible output representative of the generated cleaning guidance.

2. The processing system (130) of claim 1, wherein the generated cleaning guidance comprises a suggested initial cleaning position.

3. The processing system (130) of claim 1 or 2, wherein the processing system generates the cleaning guidance based on the cleaning history data (125) by:
determining an initial cleaning position frequency for each of a plurality of predefined initial cleaning positions based on the cleaning history data; and
generating the cleaning guidance based on the determined initial cleaning position frequencies.

4. The processing system (130) of claim 3, wherein:
the generated cleaning guidance comprises a suggested initial cleaning position, and
the processing system generates the cleaning guidance based on the determined initial cleaning position frequencies by:
determining a most frequent initial cleaning position based on the determined initial cleaning position frequencies; and
generating a suggested initial cleaning position based on the most frequent initial cleaning position.

5. The processing system (130) of claim 3 or 4, wherein:
the generated cleaning guidance comprises a suggested initial cleaning position, and
the processing system generates the cleaning guidance based on the determined initial cleaning position frequencies by:
determining a least frequent initial cleaning position based on the determined initial cleaning position frequencies; and
generating a suggested initial cleaning position based on the least frequent initial cleaning position.

6. The processing system (130) of any of claims 1 to 5, wherein the cleaning history data (125) further comprises a final cleaning position of the tooth cleaning device (150) for each of the plurality of previous cleaning sessions of the subject.

7. The processing system (130) of any of claims 1 to 6, wherein the cleaning history data (125) comprises a sequence of cleaning positions of the tooth cleaning device (150) for each of the plurality of previous cleaning sessions of the subject.

8. The processing system (130) of any of claims 1 to 7, wherein the generated cleaning guidance comprises a suggested cleaning sequence including an initial cleaning position and at least one other suggested position.

9. The processing system (130) of claim 8, wherein the at least one other suggested position comprises a suggested final cleaning position.

10. The processing system (130) of claim 8 or 9, wherein the at least one other suggested position comprises a suggested starting position for a second sub-sequence of the suggested cleaning sequence.

11. The processing system (130) of any of claims 1 to 10, wherein the processing system is further configured to:
receive, from one or more sensors (160), cleaning position data (165) representative of a position of a tooth cleaning device (150) within a mouth of the subject (110) during the current cleaning session;
detect one or more cleaning positions (135) in the cleaning position data, wherein the one or more cleaning positions comprises at least an initial cleaning position; and
control a memory unit (120) to store the one or more cleaning positions.

12. A system (100) for providing cleaning guidance to a subject (110), the system comprising:
a memory unit (120), configured to store cleaning history data (125) comprising an initial cleaning position of a tooth cleaning device (150) for each of a plurality of previous cleaning sessions of the subject;
the processing system (130) of any of claims 1 to 11, configured to receive the cleaning history data from the memory unit; and
a feedback unit (140), configured to provide to provide a user-perceptible output representative of the generated cleaning guidance based on an instruction from the processing system.

13. The system (100) of claim 12, further comprising:
one or more sensors (160), configured to obtain cleaning position data (165) representative of a position of a tooth cleaning device (150) within a mouth of the subject (110),
wherein the processing unit (130) is configured to:
receive the cleaning position data from the one or more sensors;
detect one or more cleaning positions (135) in the cleaning position data, wherein the one or more cleaning positions comprises at least an initial cleaning position; and
control the memory unit (120) to store the one or more cleaning positions.

14. A computer-implemented method (400) for providing cleaning guidance to a subject (110), the computer-implemented method comprising:
receiving cleaning history data (125) comprising an initial cleaning position of a tooth cleaning device (150) for each of a plurality of previous cleaning sessions of the subject;
generating cleaning guidance for a current cleaning session based on the cleaning history data; and
controlling a feedback unit (140) to provide a user-perceptible output representative of the generated cleaning guidance.

15. A computer program product comprising computer code means which, when executed on a computer device having a processing system, cause the processing system to perform all of the steps of the method (400) according to claim 14.
